(19) Europäisches Patentamt
European Patent Office
Office européen des brevets

(11) EP 3 696 734 A1

(12) EUROPEAN PATENT APPLICATION

(43) Date of publication:
19.08.2020 Bulletin 2020/34

(51) Int Cl.:
G06N 3/04 (2006.01)
G06K 9/00 (2006.01)
G08G 1/01 (2006.01)
G05D 1/02 (2020.01)
G06T 1/20 (2006.01)
G06K 9/62 (2006.01)
G05D 1/00 (2006.01)
G06N 3/08 (2006.01)

(21) Application number: 19157374.0

(22) Date of filing: 15.02.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Siemens Aktiengesellschaft
80333 München (DE)

(72) Inventors:
• Krompaß, Denis
81549 München (DE)
• Yang, Yinchong
81673 München (DE)

(54) **TENSOR-TRAIN RECURRENT NEURAL NETWORK SUPPORTED AUTONOMOUS AND ASSISTED DRIVING**

(57) The invention claims an automated method of action generation in autonomous or assisted driving. The method comprises the following steps: Providing data, whereas at least part of the data is captured by at least one sensor, whereas the sensor is arranged in or on a vehicle and whereas the data comprise at least one image sequence (11), processing the data using a Tensor-Train recurrent neural network 6), and generating an action by the Tensor-Train recurrent neural network (6) based on the processed data.

The invention further claims a system for generating an action comprising a computational device whereas the system is designed for performing the inventive method.

FIG 2

## Description

Field of the Invention

The present invention relates to an automated method of action generation in autonomous or assisted driving and a system for generating an action comprising a computational device whereas the system is designed for performing the inventive automated method.

Background of the Invention

Deep neural networks are nowadays widely applied to support autonomous driving systems. Heavily relying on the visual input captured using cameras installed in the vehicle, these neural networks are trained to recognize, for instance, traffic signs and lights, lanes and pedestrians. Such entities are expected to be represented in the neural networks as (subset of) latent vectors. Based on this information, the last layer(s) in the network can derive action decisions such as the degree of wheel steering, giving more gas or braking, which are sent to the controller of the vehicle.

Intuitive this may seem, the challenge in designing such a system is often the choice of the neural network architecture, especially the hyper parameters including the size and activation functions, as well as the connection structure between multiple layers.

Image processing (or computer vision) is one of the most active research fields of deep learning and has also seen the most successful applications. To this end, most neural networks for an autonomous driving system nowadays analyze the visual input on a single-frame basis. The neural network derives a set of action decisions, such as braking, wheel axis, etc. for each single frame.

An apparent downside of this design is that the system cannot extract dynamic information from the visual input. The dynamic information including, for instance but not restricted to, the movement of other vehicles and movement of pedestrians, could be extremely crucial in generating the action decisions. To derive the correct message from these movements, one usually needs to consider the sequence of images instead of single images. For instance, to tell whether a vehicle is moving, whether a pedestrian is standing still or about to cross the road, one -human and machine alike- could only process a sequence of frames. And this information could be the most determining factor for an action decision of braking. Merely looking at each single frame does not reveal any information about a vehicle parking or moving and the action generated from this one frame could turn out suboptimal. Taking a whole sequence of images into account, however, demonstrates if the vehicle is moving or parking. In this case, joining only two images might already be enough for the system to decide to brake, while the single-frame model might not decide to brake by not taking the combined information into account.

The need to process sequence of images poses a significant challenge to the design of deep neural networks. The typical Convolutional Neural Networks (CNNs) are nowadays already quite large and complicated, consisting of tens of layers and multiple millions of trainable parameters. Combining the feature maps extracted by these CNNs in a temporal architecture using Recurrent Neural Networks (RNNs) such as Long Short-Term Memory (LSTM) or Gated Recurrent Unit (GRU) would make the entire neural network even larger and deeper.

The Recurrent Neural Networks and their variants have shown promising performances in sequence modelling tasks such as Natural Language Processing. These models, however, turn out to be impractical and difficult to train when exposed to very high-dimensional inputs due to the large input-to-hidden weight matrix.

One would need extremely powerful hardware such as multiple parallel GPUs and TPUs, but that is not even a guarantee for the success of the training. The error back-propagation must be performed first through the time dimension of the recurrent neural networks, depending on the number of frames one wants to process. Then what is left of the error signals is to be propagated through tens of convolutional layers. The bottom layers are expected to receive close to zero training, while they are supposed to learn the most fundamental features from the image, such as basic patterns, edges, etc.

This may have prevented RNNs' large-scale application in tasks that involve very high input dimensions such as video modelling; current approaches reduce the input dimensions using various feature extractors. To address this challenge, Yang et al. proposed a new, more general and efficient approach by factorizing the input-to-hidden weight matrix using Tensor-Train decomposition which is trained simultaneously with the weights themselves [Yang, Yinchong; Krompass, Denis; Tresp, Volker. Tensor-Train Recurrent Neural Networks for Video Classification. Proceedings of the 34th International Conference on Machine Learning, Sydney, Australia, PMLR 70, 2017].

Summary of the Invention

It is an object of the invention to provide an alternative to the state of the art and improve the use of machine learning in autonomous and assisted driving.

To accomplish the objective, the present invention provides a method to apply Tensor-Train neural networks to process sequence of images of a traffic environment and generate action recommendations in autonomous and assisted driving.

The invention is given by the features of the independent claims. Advantageous embodiments are provided in the dependent claims. Further features, application possibilities, and advantages of the invention result from the following description.

The invention claims an automated method of action generation in autonomous or assisted driving. The method comprises the following steps: (1) Providing data, whereas at least part of the data is captured by at least one sensor, whereas the sensor is arranged in or on a vehicle and whereas the data comprise at least one image sequence, (2) processing the data using a Tensor-Train recurrent neural network, and (3) generating an action by the Tensor-Train recurrent neural network based on the processed data.

This has the advantage that compared to CNNs on a single frame basis, which does not take dynamic information into account, the present invention is capable of explicitly processing dynamic information from sequence of images.

Compared to joining CNNs and RNNs, which results in a huge and thus difficult to train architecture, both in computational and numerical senses, the present invention solves both computational and numerical problems at the same time. The much more lightweight network architecture of the present invention consists of much less (in term of multiple magnitudes) trainable parameters and much less layers. Such a model can be trained on regular hardware (not necessarily GPUs) and the training is much more tractable, in that the error signals are back-propagated through only few non-linear layers that form the decision boundaries, and multiple linear layers that extract the image patterns. Please note that in these linear layers, the gradients shall not vanish. These layers are thus expected to be able to extract relevant fundamental visual features from the input image.

According to a further embodiment the Tensor-Train recurrent neural network comprises long short-term memory (LSTM) units and gated recurrent units (GRUs).

According to a further embodiment part of the provided data is traffic data.

According to a further embodiment the action is a speed, break or driving wheel information. This feature has the advantage of enabling the inventive method to be used to give action recommendation to steer a vehicle.

According to a further embodiment the image sequence is captured in a traffic environment. This feature has the advantage of enabling the inventive method to be used to control a vehicle in a traffic environment.

According to a further embodiment the sensor is a camera. This feature has the advantage of enabling the inventive method to use image-based data in addition to other sensor data like acoustics.

According to a further embodiment the image sequence contains dynamic information. This feature has the advantage of enabling the inventive method to use dynamic information.

According to a further embodiment the data comprise data other than image data captured by at least one further sensor. This feature has the advantage of enabling the inventive method to use further data.

According to a further embodiment the data processing and the action generation is performed in a cloud environment by a Tensor-Train recurrent neural network.

According to a further embodiment the generated action is transmitted to the vehicle.

The present invention further claims a system for generating an action comprising a computational device whereas the system is designed for performing the method according to one of the previous claims.

Summarized, the advantages of the invention are:

Compared to CNNs on a single frame basis, which does not take dynamic information into account, the present invention is capable of explicitly processing dynamic information from sequence of images.

Compared to joining CNNs and RNNs, which results in a huge and thus difficult to train architecture, both in computational and numerical senses, the present invention solves both computational and numerical problems at the same time. The much more lightweight network architecture of the present invention consists of much less (in term of multiple magnitudes) trainable parameters and much less layers. Such a model can be trained on regular hardware (not necessarily GPUs) and the training is much more tractable, in that the error signals are back-propagated through only few non-linear layers that form the decision boundaries, and multiple linear layers that extract the image patterns. Please note that in these linear layers, the gradients shall not vanish. These layers are thus expected to be able to extract relevant fundamental visual features from the input image.

To describe the technical features which contribute to each mentioned advantage a detailed introduction of the Tensor-Train RNN follows. A Tensor-Train RNN replaces the input-to-hidden layer in a standard RNN architecture with a so-called Tensor-Train layer. A Tensor-Train layer reshapes a fully-connected layer

$$\hat{y}(j) = \sum_{i=1}^{M} W(j,i) \cdot x(i) + b(j)$$

with

$$x \in \mathbb{R}^M, y \in \mathbb{R}^N, \forall j \in [1,N] W \in \mathbb{R}^{N x M}$$

Eq.1

into a high dimensional tensor

$$y(j_1, j_2, \ldots, j_d) = \sum_{i_1=1}^{m1} \sum_{i_2=1}^{m2} \ldots \sum_{i_d=1}^{md} w(l_1, l_2, \ldots, l_d) \cdot X(i_1, i_2, \ldots i_d) + B(j_1, j_2, \ldots, j_d)$$

with $l_k = m_k \cdot j_k + i_k \; \forall k \in [1,d]$.

Eq.2

and factorizes this into a train of 3-way tensors:

$$\hat{y}/(j_1, j_2, \ldots, j_d) = \sum_{i_1=1}^{m_1} \sum_{i_2=1}^{m_2} \ldots \sum_{i_d=1}^{m_d} G_1(l_1) \cdot G_2(l_2) \cdot \ldots \cdot G_d(l_d) \cdot X(i_1, i_2, \ldots, i_d)$$
$$+ B(j_1, j_2, \ldots, j_d)$$

Eq.3

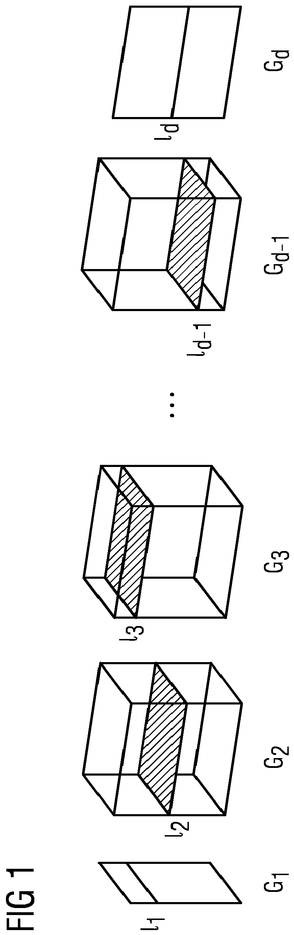

An illustration of such a factorization can be found in Figure 1. Figure 1 shows an illustration of the Tensor-Train decomposition of a d-way tensor into a train of 3-way tensors, the length of which being d.

This decomposition is capable of largely reducing the number of trainable weight parameters that are responsible for the fully connected layer. For a X → Y mapping of size M → N, if we can factorize the size of both input and output as:

$$X \in \mathbb{R}^{m_1 \, x \, m_2 \, x \, m_d} \; and \; \hat{Y} \in \mathbb{R}^{n_1 \, x \, n_2 \, x \, n_d}$$

then we can show that the Tensor-Train decomposition reduces the number of necessary weight parameters from $\prod_{k=1}^{d} m_m n_k$ to $\sum_{k=1}^{d} m_k n_k \, r_{k-1} r_k$, where r is the rank of the 3-way tensors that controls the complexity and thus expressiveness of the model.

The reduction of number of trainable parameters is the key technical feature that contributes to the advantage compared to joining CNNs and RNNs. Image data, even single frames, are always of quite high dimensionality. Even for a small image in resolution of, say, 160x120x3 (in our experiments), a fully connected layer that maps it into a latent space of size 256 would require 14,745,600 trainable weight parameters. With a Tensor-Train decomposition with rank = 4, we only need 2,979 parameters. In reality however, the images are much larger, and the reduction of weight size is more significant.

It is equally crucial that the model should retain its modeling power (expressiveness) after Tensor-Train decomposition, given the specific data situation. CNNs are undoubtedly powerful tools to extract abstract and latent features from image data. However, the visual input captured by a camera in the vehicle generates images that are of significantly simpler nature, including, for instance, only road signs, lane markings, humans, etc., while in the benchmark image classification tasks, the features are much richer in both quality and quantity. To this end, we argue that applying deep CNN to handle image data in the context of autonomous driving could overkill and a waste of computational power. In the Tensor-Train RNN, however, we have an alternative and simpler way to process the image pixels.

Therefore, the images captured by a camera in a vehicle are of much simpler nature, compared with benchmark datasets for image classifications. In these images, each subtle feature on the image could be relevant for the classification task, while for autonomous driving the model only needs to derive information for a small set of entities, such as human, vehicle, lane markings, etc. To this end, CNNs of high complexity could lead to significant insufficiency, making the model unnecessarily hard to train. The Tensor-Train layer, on the other hand, can also be seen as a regularization of the weights in a fully connected layer. With a properly chosen rank, we can force the network to focus its computational capacity on the truly relevant features and entities on the image.

In comparison with the single-frame solution under point, the technical feature in our invention lies in the fact that we join the latent features extracted by the Tensor-Train layer in an RNN framework, such as long short-term memory (LSTM) units and gated recurrent units (GRUs). We denote a Tensor-Train layer (TTL) with input X and original weight matrix W using

$\hat{y}$ = *TTL(x|W,b) or* $\hat{y}$ = *TTL(x|W)*, in case we do not need the bias parameter.

Specifically, for LSTM and GRU, one calculates simultaneously 4 and 3, respectively, forward passes from input to the so-called gates that form the hidden state. Taking LSTM for example, instead of applying 4 Tensor-Train decompositions, we propose to concatenate the weight matrices for all 4 gates in the horizontal axis:

$$W x^{[t]} = [W^k, W^f, W^g, W^o] x^{[t]}$$

and decompose the weight matrix of W. Therefore, the complete definition of Tensor-Train LSTM is

$$k^{[t]} = \sigma(v^{k,[t]} + U^k h^{[t-1]} + b^k)$$

$$f^{[t]} = \sigma(v^{f,[t]} + U^f h^{[t-1]} + b^f)$$

$$o^{[t]} = \sigma(v^{o,[t]} + U^o h^{[t-1]} + b^o)$$

$$g^{[t]} = tanh(v^{g,[t]} + U^g h^{[t-1]} + b^g)$$

$$c^{[t]} = f^{[t]} o\ c^{[t-1]} + k^{[t]} o\ g^{[t]}$$

$$h^{[t]} = o^{[t]}\ o\ tanh\ (c^{[t]}).$$

$$\text{with}\ \left[v^{k,[t]}, v^{f,[t]}, v^{o,[t]}, v^{g,[t]}\right] = TTL\left(x^{[t]}\middle|\ W^k, W^f, W^g, W^o\middle|\right)$$

$$\text{Eq.4}$$

It is easy to see that each gate vector k, f, o and g is a function dependent of the current input x[t] and the last hidden state h[t-1], which is dependent of the last input x[t-1]. Due to this recursive Markovlike definition, each hidden state h[t] is dependent of the entire history.

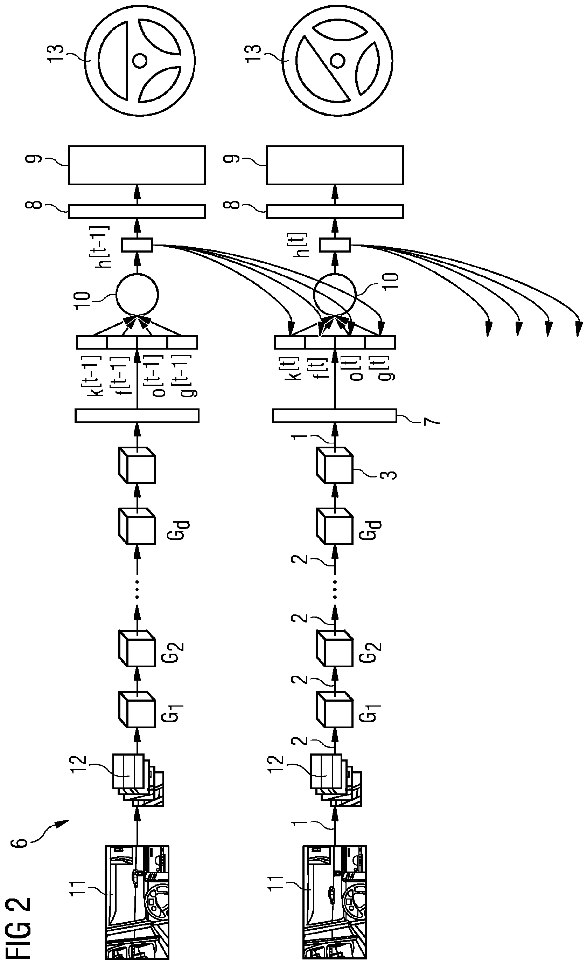

Figure 2 shows an illustration of the complete model architecture. Note that firstly the Tensor-Train decomposition of the weight matrix greatly reduces its original size, while retaining the model's expressiveness; Secondly, the hidden state at each time step is always dependent of itself at the last time step. This Markov-like effect enables the model to derive dynamic information for decision making in the context of autonomous driving.

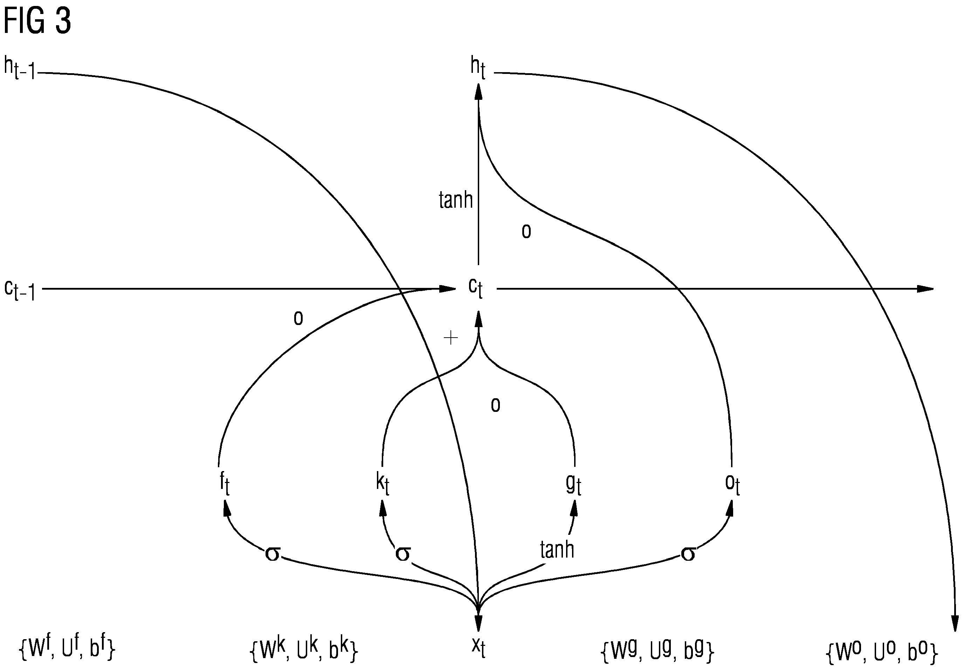

The LSTM cell 10 performs the calculation to combine the four gate vectors as defined in the 5th and 6th equations in Eq. 4. An illustration can be found in Figure 3. Figure 3 shows a closer look at the LSTM cell 10 from Fig 2.

Autonomous driving techniques can find their applications in multiple business fields. The most direct one is mobility, especially trams, subways and trains.

In other businesses where automation is playing a deciding role, one could also expect a wide application of self-driving systems. In digital industries and smart infrastructure, for instance, one would need intelligent maintenance droids that can move around in a specific environment. Especially for these smaller robots it is more crucial, that a self-driving system have to be deployed on edge devices, where wireless connection to a centralized controller with powerful hardware is either impossible or instable.

The new and unique aspects and provide and the key algorithms which comprise the novelty of the present invention is:

The algorithm of calculating the Tensor-Train in a forward pass as follows:

Input: $X \in \mathbb{R}^{S \times M}, (m_k)_{k=1}^{d}, (n_k)_{k=1}^{d}, (r_k)_{k=0}^{d};$

Output : $Y \in \mathbb{R}^{S \times N};$

Initialize:

$$\{G\}_{k=1}^{d} \text{ with } G_k \in \mathbb{R}^{m_k \times n_k \times r_{k-1} \times r_k};$$

$$b \in \mathbb{R}^{N}$$

$$Z := X$$

$$for \ k \ = \ 1 \ to \ d \ do$$

$$Z := Z.reshape \ (S \cdot \prod_{\substack{k'=1 \\ k' \neq k}}^{d} m_{k'}, m_k \cdot r_{k-1})$$

$$G_k^* := G_k.reshape(m_k \cdot r_{k-1}, r_k \cdot n_k)$$

$$Z := Z \cdot G_k^*$$

$$end \ for$$

$$Y := Z$$

$$for \ s \ = \ 1 \ to \ S \ do$$

$$Y(s) \ = \ Y(s) + b$$

$$end \ for$$

The training, namely the error back-propagation is to be performed in regular network. Important is the calculation of the Jacobian.

For a more concise explanation, we assume that the Tensor-Train layer is the only layer in a neural network with input X, output Y and error function E, because training the RNN part, such as the LSTM cell, is already well-known textbook knowledge. With respect of one core tensor $G_k$ in the decomposition, the derivative can be written as

$$\frac{\partial E}{\partial G_k(l_k)} = \frac{\partial E}{\partial \hat{Y}(j_1, j_2, \ldots, j_d)} \frac{\partial \hat{Y}(j_1, j_2, \ldots, j_d)}{G_k(l_k)}$$

Eq. 5

Applying the chain rule further we can have:

$$\frac{\partial \hat{Y}(j_1, j_2, \ldots, j_d)}{\partial G_k(l_k)} = \frac{\partial \hat{Y}(j_1, j_2, \ldots, j_d)}{\partial H_{d-1}(l_{d-1})} \cdot \prod_{k*=k+1}^{d-1} \frac{\partial H_{k*}(l_{k*})}{\partial H_{k*-1}(l_{k_*-1})} \cdot \frac{\partial H_k(l_k)}{\partial G_k(l_k)}$$

$$= \prod_{k*>k} G_{k*}(l_{k*}) \cdot X(i_1, i_2, \ldots, i_d) \cdot \prod_{k*<k} G_{k*}(l_{k*}),$$

Eq. 6

Where

$$H_k(l_k) = G_1(l_1) \cdot G_2(l)_2 \cdot \ldots \cdot G_k(l_k) \cdot X(i_1, i_2, \ldots, i_k) \in \mathbb{R}^{r_k}$$

which allows us a more concise presentation of the Jacobian.
Further benefits and advantages of the present invention will become apparent after a careful reading of the detailed description with appropriate reference to the accompanying drawings.

Brief Description of the Drawings

Fig. 1 shows an illustration of the Tensor-Train decomposition,

Fig. 2 shows an illustration of the complete Tensor-Train RRN model architecture,

Fig. 3 shows a LSTM cell,

Fig. 4 shows a flow diagram,

Fig. 5 shows a single frame-based model,

Fig. 6 shows an ideal model architecture with both CNN and RNN, and

Fig. 7 Tensor-Train RNN architecture.

Detailed Description of the Invention

Figure 1 shows an illustration of the Tensor-Train decomposition of a d-way tensor into a train of 3-way tensors, the length of which being d. As described previously, this decomposition is capable of largely reducing the number of trainable weight parameters that are responsible for the fully connected layer. $G_k$ the core tensor with k = 1-d, d is the length.
Figure 2 shows an illustration of the complete Tensor-Train RRN 6 model architecture. Note that firstly the Tensor-Train decomposition of the weight matrix greatly reduces its original size, while retaining the model's expressiveness; Secondly, the hidden state at each time step is always dependent of itself at the last time step. This Markov-like effect enables the model to derive dynamic information for decision making in the context of autonomous driving.
The detailed steps shown in Figure 2 are explained in the following. Firstly, an image sequence 11 is processed by a reshaping 1 step into pixel values 12. Afterwards a Tensor-Train decomposition (Figure 1) with multiplication 2 steps follows. The result is a representation tensor 3, which is transformed by a reshaping 1 step into a representation vector 7. The representation vector 7 is transferred in the gate vectors k(t), f(t), o(t), and g(t). The gate vectors k(t), f(t), o(t), and g(t) are transferred in the LSTM Cell 10 and transferred into the last hidden state h[t-1]. The information from the last hidden state h[t-1] from one layer is given to the gate vectors k(t), f(t), o(t), and g(t) of the following layers. Afterwards logistic regression 8 and action predictions 9 follows. An example of an action predictions 9 is the movement of a steering wheel

The LSTM cell 10 performs the calculation to combine the four gate vectors k(t), f(t), o(t), and g(t)as defined in the 5th and 6th equations in Eq. 4. An illustration can be found in Figure 3. Figure 3 shows a closer look at the LSTM cell 10 from Figure 2.

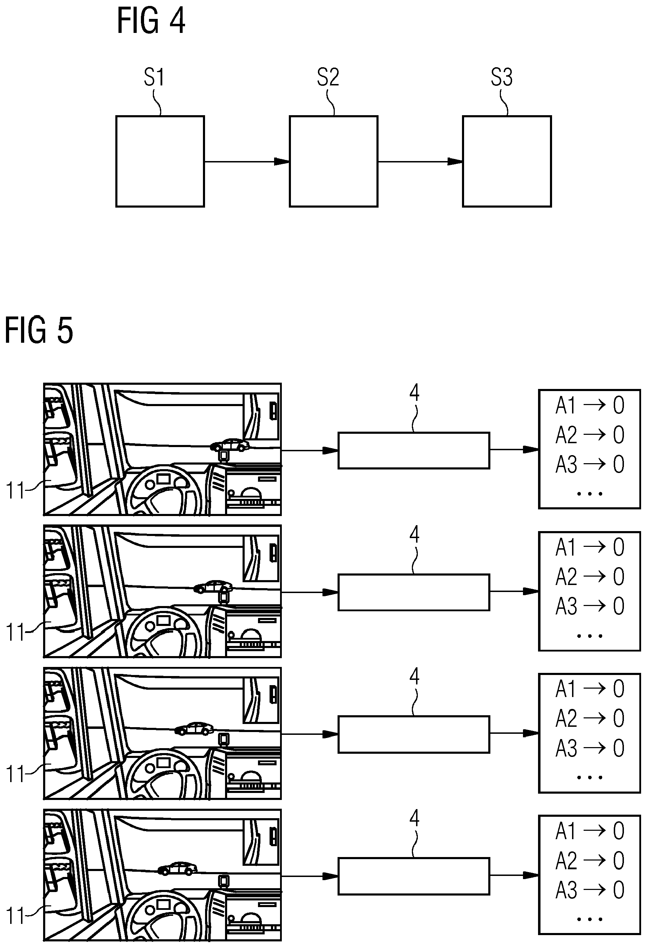

Figure 4 shows a flow diagram of the inventive automated method of action generation in autonomous or assisted driving. The method comprises three steps with step 1 S1 being capturing data by at least one sensor, whereas the sensor is arranged in or on a vehicle and whereas the data comprise at least one image sequence, with step 2 S2 being processing the data using a Tensor-Train recurrent neural network, and with step 3 S3 being generating an action by the Tensor-Train recurrent neural network based on the processed data.

Figure 5 shows a single frame-based model. Single images 11 are fed to CNN (Convolutional Neural Networks) 4, which process the image information and produce for different actions, for example action 1 A1, action 2 A2, and action 3 A3 outputs O. Examples for actions A1, A2, A3 are wheel axis, gas, or brake actions. Most state-of-the-art neural networks for an autonomous driving system analyze the visual input on a single-frame basis. The neural network derives a set of action decisions, such as braking, wheel axis, etc. for each single frame.

An apparent downside of this design is that the system cannot extract dynamic information from the visual input. The dynamic information including, for instance but not restricted to, the movement of other vehicles and movement of pedestrians, could be extremely crucial in generating the action decisions. To derive the correct message from these movements, one usually needs to take into account the sequence of images instead of single images. For instance, in order to tell whether a vehicle is moving, whether a pedestrian is standing still or about to cross the road, one -human and machine alike- could only process a sequence of frames. And this information could be the most determining factor for an action decision of braking. As in Figure 5, merely looking at each single frame does not reveal any information about the red vehicle is parking or moving and the action generated from this one frame could turn out suboptimal. Taking the whole sequence of images into account, however, demonstrates that the red vehicle is moving. In this case, joining the first both images is sufficient for the system to decide to brake. The single-frame model might decide to brake at the fourth frame where the vehicle is right ahead, and a brake could be already too late.

The need to process sequence of images poses a significant challenge to the design of deep neural networks. The typical Convolutional Neural Networks (CNNs) are nowadays already quite large and complicated, consisting of tens of layers and multiple millions of trainable parameters. Combining the feature maps extracted by these CNNs in a temporal architecture using Recurrent Neural Networks (RNNs) such as Long Short-Term Memory (LSTM) or Gated Recurrent Unit (GRU) would make the entire neural network even larger and deeper.

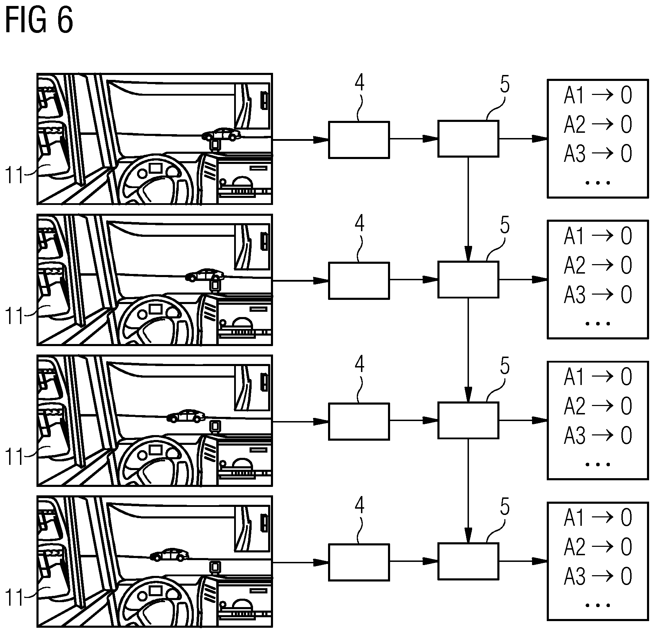

For autonomous driving images, it implies that an earlier frame can still have an impact on the current action decision. Figure 6 shows an ideal model architecture with both CNN 4 and RNN (Recurrent Neural Networks) 5, exploiting dynamic information in the image sequence, but too large and too difficult to train.

One would need extremely powerful hardware such as multiple parallel GPUs and TPUs, but that is not even a guarantee for the success of the training. The error back-propagation must be performed first through the time dimension of the recurrent neural networks, depending on the number of frames one wants to process. Then what is left of the error signals is to be propagated through tens of convolutional layers. The bottom layers are expected to receive close to zero training, while they are supposed to learn the most fundamental features from the image, such as basic patterns, edges, etc.

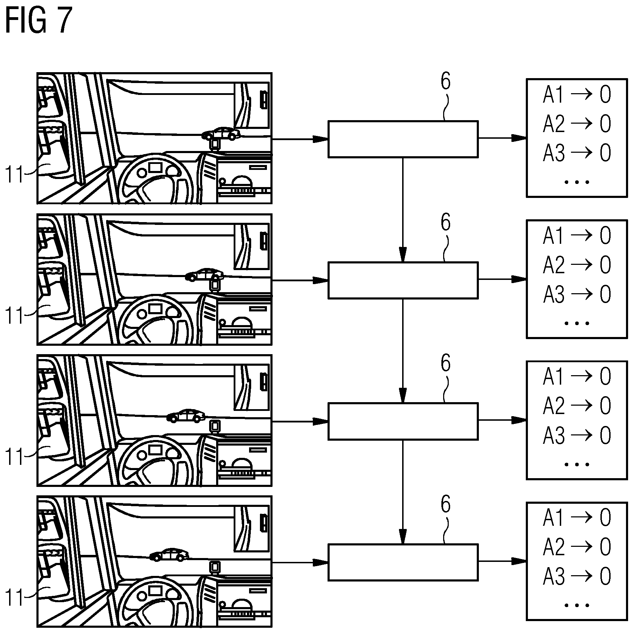

The architecture in Figure 7 is like that in Figure 6 but focuses its modelling expressiveness on the RNN part, while dropping the costly CNN. Figure 7 shows the inventive architecture, using Tensor-Train RNN 6 directly on the image sequence. At frame 2, the model is expected to have already figured out that the red vehicle is moving by taking the first frame into account and thus make the decision of releasing gas and hitting brake. Please note that the architecture in Figure 6 is also expected to capture this temporal pattern, if the model can be sufficiently trained in the first place, which is, unfortunately not the case.

The Tensor-Train RNN is supposed to consume the image input as pixel values directly and directly generate a latent representation of the current image. This latent representation is then augmented with the representation from the last time step, so that the dynamic information can be calculated to derive the optimal action.

CNNs are undoubtedly powerful tools to extract abstract and latent features from image data. However, the visual input captured by a camera in the vehicle generates images that are of significantly simpler nature, including, for instance, only road signs, lane markings, humans, etc., while in the benchmark image classification tasks, the features are much richer in both quality and quantity. To this end, we argue that applying deep CNN to handle image data in the context of autonomous driving could overkill and a waste of computational power. In the Tensor-Train RNN, however, we have an alternative and simpler way to process the image pixels. More details to Tensor-Train RNN in general were elaborated before.

Although the invention has been explained in relation to its preferred embodiments as mentioned above, it is to be understood that many other possible modifications and variations can be made without departing from the scope of the present invention. It is, therefore, contemplated that the appended claim or claims will cover such modifications and variations that fall within the true scope of the invention.

**Claims**

1. Automated method of action generation in autonomous or assisted driving, **comprising:**

   - providing data, whereas at least part of the data is captured by at least one sensor, whereas the sensor is arranged in or on a vehicle and whereas the data comprise at least one image sequence,
   - processing the data using a Tensor-Train recurrent neural network, and
   - generating an action by the Tensor-Train recurrent neural network based on the processed data.

2. Method according to claim 1, **wherein**
   the Tensor-Train recurrent neural network comprises long short-term memory (LSTM) units and gated recurrent units (GRUs).

3. Method according to one of the previous claims, **wherein** part of the provided data is traffic data.

4. Method according to one of the previous claims, **wherein** the action is a speed, break or driving wheel information.

5. Method according to one of the previous claims, **wherein** the image sequence (11) is captured in a traffic environment.

6. Method according to one of the previous claims, **wherein** the sensor is a camera.

7. Method according to one of the previous claims, **wherein** the image sequence (11) contains dynamic information.

8. Method according to one of the previous claims, **wherein** the data comprise data other than image data captured by at least one further sensor.

9. Method according to one of the previous claims, wherein the data processing and the action generation is performed in a cloud environment by a Tensor-Train recurrent neural network (6).

10. Method according to claim 1 to 9, **wherein,**
    the generated action is transmitted to the vehicle.

11. System for generating an action comprising a computational device whereas the system is designed for performing the method according to one of the previous claims.

## FIG 1

$G_1$    $G_2$    $G_3$    ...    $G_{d-1}$    $G_d$

FIG 2

FIG 3

EP 3 696 734 A1

FIG 4

FIG 5

## FIG 6

FIG 7

Europäisches
Patentamt

European
Patent Office

Office européen
des brevets

# EUROPEAN SEARCH REPORT

Application Number

EP 19 15 7374

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | YINCHONG YANG ET AL: "Tensor-Train Recurrent Neural Networks for Video Classification", CORR (ARXIV), vol. 1707.01786v1, 6 July 2017 (2017-07-06), pages 1-10, XP055549079, * abstract * * page 1, left-hand column, line 1 - page 6, left-hand column, line 20 * | 1-11 | INV. G06N3/04 G06T1/20 G06K9/00 G06K9/62 G08G1/01 G05D1/00 G05D1/02 G06N3/08 |
| Y | US 2018/120843 A1 (BERNTORP KARL [US] ET AL) 3 May 2018 (2018-05-03) * abstract * * paragraph [0004] - paragraph [0016] * * paragraph [0069] * * figures 1C-1E * | 1-11 | |
| A | US 2018/339710 A1 (HASHIMOTO DAISUKE [JP]) 29 November 2018 (2018-11-29) * abstract * * paragraph [0008] * * paragraph [0046] - paragraph [0064] * * figures 1, 2, 6 * | 1-11 | |
| A | US 2018/053108 A1 (OLABIYI OLUWATOBI [US] ET AL) 22 February 2018 (2018-02-22) * abstract * * paragraph [0046] - paragraph [0059] * | 1-11 | TECHNICAL FIELDS SEARCHED (IPC) G06N G06T G06K G08G G05D B60W |
| A | US 2018/257661 A1 (KROOP BENJAMIN [US] ET AL) 13 September 2018 (2018-09-13) * abstract * * paragraph [0003] * * paragraph [0065] - paragraph [0089] * * figures 1, 7 * | 1-11 | |

The present search report has been drawn up for all claims

| Place of search | Date of completion of the search | Examiner |
|---|---|---|
| The Hague | 19 July 2019 | Mandato, Davide |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.........................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 19 15 7374

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2019

| Patent document cited in search report | | Publication date | Patent family member(s) | | Publication date |
|---|---|---|---|---|---|
| US 2018120843 | A1 | 03-05-2018 | CN | 109964188 A | 02-07-2019 |
| | | | JP | 2019519851 A | 11-07-2019 |
| | | | US | 2018120843 A1 | 03-05-2018 |
| | | | WO | 2018084324 A1 | 11-05-2018 |
| US 2018339710 | A1 | 29-11-2018 | JP | 2018197977 A | 13-12-2018 |
| | | | US | 2018339710 A1 | 29-11-2018 |
| US 2018053108 | A1 | 22-02-2018 | JP | 6369611 B2 | 08-08-2018 |
| | | | JP | 2018028906 A | 22-02-2018 |
| | | | US | 2018053108 A1 | 22-02-2018 |
| US 2018257661 | A1 | 13-09-2018 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YANG, YINCHONG ; KROMPASS, DENIS ; TRESP, VOLKER.** Tensor-Train Recurrent Neural Networks for Video Classification. *Proceedings of the 34th International Conference on Machine Learning,* 2017